# EUROPEAN PATENT APPLICATION

(11) **EP 4 496 154 A1**
(43) Date of publication of application: **22.01.2025**
(21) Application number: 23769784.2
(22) Date of filing: 14.03.2023
(51) Int. Cl.: H01R 31/06, H01R 13/73

(54) **LIQUID COOLING CONNECTOR ASSEMBLY AND VEHICLE**

(30) Priority: 14.03.2022 CN 202210250054
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2023/081366
(87) International publication number: WO 2023/174282

(57) **Abstract**

A liquid cooling connector assembly and a vehicle. The liquid cooling connector assembly comprises at least one electrical connection skeleton and connectors. In which each of the connectors including a connection terminal, in which two ends of the electrical connection skeleton are respectively electrically connected to connection terminals, a protective shell is sleeved on an outer periphery of the electrical connection skeleton, a cavity is formed between the periphery of the electrical connection skeleton and an inner wall of the protective shell, and the cavity has cooling liquid flowing through it. The disclosure can reduce high temperature failure, reduce the diameter of the electrical connection skeleton, prolong the service life, improve the safety of the whole vehicle and shield the electromagnetic interference.

## Description

### CROSS REFERENCE TO RELATED APPLICATION

The present application claims priority of the Chinese Patent Application No. 202210250054.8, filed on March 14, 2022, and entitled "LIQUID COOLING CONNECTOR ASSEMBLY AND VEHICLE", the entire contents of which are incorporated herein by reference.

### TECHNICAL FIELD

The disclosure relates to the technical field of automobile electric energy transmission, and more specifically to a liquid cooling connector assembly and a vehicle.

### BACKGROUND

With the increasing popularity of new energy automobiles, equipment and facilities supplying power to the new energy automobiles have also developed. Because the connector assembly on the new energy automobile is required to meet the requirements of driving a high-power motor, the transmission current is relatively high, and the diameter of a high-voltage cable on the connector assembly also increases, and the assembly on the vehicle body can only be installed manually, wasting labor costs and time costs.

In addition, in the process of normal use, a very high current may flow through the high-voltage cable, thus the high-voltage cable and a connection joint may both generate a large amount of heat. Since excessive heat may lead to high temperature, high-voltage cable connection position and the surrounding connected parts and fixed parts may fail due to high temperature, which affects the normal use of high-voltage devices, resulting in short circuit or open circuit, and even create electric shock hazard that endangers lives.

High-voltage cables generate strong electromagnetic interference due to the high current. In order to reduce the impact of electromagnetic interference, the high-voltage cable shields the electromagnetic interference generally by using a shielding net. At present, the commonly used shielding net is formed by knitting metal wires, and thus it is necessary to increase a shield knitting machine in the cable production equipment. The equipment has a high price and occupies a large area, causing that the price of the shielding cable of the connector remains high. At present, the shielding technology for the connector is not particularly perfect yet, which may cause the electrical appliances in the vehicle to be interfered and become inoperable.

At present, there is no practical solution to the above problems. Therefore, in the technical field of automotive electrical appliances, there is an urgent need of a connector assembly that has a small wire diameter and a low cable heat output, and can realize automated production and assembly.

### SUMMARY

An objective of the disclosure is to provide a new technical solution of a liquid cooling connector assembly and a vehicle. The liquid cooling connector assembly of the disclosure is capable of reducing a failure of the electrical connection skeleton and the connection terminal caused by high temperature due to electrification, reducing the diameter of the electrical connection skeleton, extending the service life of the connector, improving the safety of the whole vehicle, and at the same time playing the role of shielding electromagnetic interference.

According to a first aspect of the disclosure, there is provided with a connector assembly with liquid cooling function (also known as a liquid cooling connector assembly), which includes at least one electrical connection skeleton and connectors, in which each of the connectors includes a connection terminal, two ends of the electrical connection skeleton are respectively electrically connected to connection terminals, protective shell with a shielding effectiveness is sleeved on an outer periphery of the electrical connection skeleton, a cavity is formed between the periphery of the electrical connection skeleton and an inner wall of the protective shell with a shielding effectiveness, and the cavity has cooling liquid flowing through it.

Material of the cooling liquid is an insulating material.

Material of the electrical connection skeleton is a rigid solid conductor material.

A cross sectional area of the electrical connection skeleton is 1.5 mm² to 240 mm².

The electrical connection skeleton is electrically connected to the connection terminal by welding or crimping.

Material of the protective shell is a rigid conductive material.

The material of the protective shell is metal or conductive plastic.

The connector further includes a shielding inner shell inside, and material of the shielding inner shell is a conductive material.

The material of the shielding inner shell is metal or conductive plastic.

The conductive plastic is a polymeric material containing conductive particles. The material of the conductive particles contains one or more selected from the group consisting of a metal, a conductive ceramic, a carbon-containing conductor, a solid electrolyte, and a mixed conductor. The material of the polymeric material contains one or more selected from the group consisting of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, poly(terephthalic acid), polyurethane elastomers, styrene block copolymer, perfluoroalkoxy alkane, chlorinated polyethylene, polyphenylene sulfide, polystyrene, crosslinked polyolefin, ethylene propylene rubber, Ethylene/vinyl acetate copolymer, chloroprene rubber, natural rubber, styrene butadiene rubber, nitrile butadiene rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

The material of the metal contains one or more selected from the group consisting of nickel, cadmium, zirconium, chromium, cobalt, manganese, aluminum, tin, titanium, zinc, copper, silver, gold, phosphorus, tellurium, beryllium.

The carbon-containing conductor contains one or more selected from the group consisting of graphite powder, carbon nanotube material, graphite-silver composite, graphene-silver composite, and graphene material.

The protective shell is electrically connected to the shielding inner shell by crimping or welding.

An impedance between the protective shell and the shielding inner shell is less than 80 mS2.

A transfer impedance of the protective shell is less than 100 mS2.

A transfer impedance of the shielding inner shell is less than 100 mS2.

The number of the electrical connection skeleton is one, the connector includes a first connector and a second connector that are connected to two ends of the electrical connection skeleton, respectively, the first connector and the second connector are internally provided with an adapter cavity, the adapter cavity is in communication with the cavity, the first connector is provided with an inlet pipe that is in communication with the adapter cavity, and the second connector is provided with an outlet pipe that is in communication with the adapter cavity.

The number of the electrical connection skeleton is at least two, the connector includes a first connector and a second connector connecting that are connected to two ends of the electrical connection skeleton, respectively, the first connector is internally provided with a communicating rotary chamber, the rotary chamber is in communication with the cavities of the individual electrical connection skeletons; the second connector is internally provided with a liquid inlet cavity and a liquid outlet cavity that are isolated from each other, and the liquid inlet cavity and the liquid outlet cavity are respectively in communication with the cavities of the individual electrical connection skeletons.

A side wall of the liquid inlet cavity is provided with a liquid inlet pipe that is in communication with outside of the connector, and a side wall of the liquid outlet cavity is provided with a liquid outlet pipe that is in communication with the outside of the connector.

A sealing structure is disposed between the connector and the protective shell.

At least one support ring is provided inside the cavity, an inner wall of the support ring is in contact with the periphery of the electrical connection skeleton, and an outer wall of the support ring is in contact with the inner wall of the protective shell.

The support ring is provided with at least one through hole in an axial direction of the electrical connection skeleton.

A total cross-sectional area of the through holes accounts for 23% to 90% of the cross-sectional area of the cavity.

The electrical connection skeleton has at least one bending position, and support rings are arranged at least at both ends of the bending position and at an intermediate position of the bending position, respectively.

The electrical connection skeleton has a cross section in a shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, P-shaped, T-shaped, U-shaped, V-shaped, W-shaped, X-shaped, Y-shaped, Z-shaped, semi-arc, arc, and waved shape.

The cross section of the electrical connection skeleton is of a polygon, and each corner of the polygon is rounded or chamfered.

At least part of the electrical connection skeleton is a flexible body.

A thickness of the protective shell accounts for 1% to 15% of an outer diameter of the protective shell.

The outer diameter of the cavity is 1.02 to 1.3 times of an outer diameter of the electrical connection skeleton.

A boiling point of the cooling liquid is higher than or equal to 100 °C.

The cooling liquid contains one or more selected from the group consisting of water, ethylene glycol, silicone oil, fluorinated liquid, castor oil, coconut oil, corn oil, cottonseed oil, linseed oil, olive oil, palm oil, peanut oil, grapeseed oil, rapeseed oil, safflower oil, sunflower oil, soybean oil, high oleic acid variants of various vegetable oils, decene-4-carboxylic-acid, decenoic acid, lauroleic acid, combined spicebush root acid, tetradecenoic acid, physeteranic acid, crude fatty acid, palmitoleic acid, petroselinic acid, oleic acid, octadecenoic acid, gadusenoic acid, gondoic acid, cetoleic acid, erucic acid, and nervonic acid, glycerol, transformer oil, axle oil, internal combustion engine oil, or compressor oil.

A cooling rate of the cooling liquid on the electrical connection is 0.05 to 5 K/s.

One of the connectors is a charging socket.

The disclosure further provides a vehicle including a liquid cooling connector assembly, a circulating pump and a cooling device as described above, wherein the cavity is in communication with the circulating pump and the cooling device.

The inlet pipe is in communication with a liquid inlet of the circulating pump, a liquid outlet of the circulating pump is in communication with a liquid inlet of the cooling device, and a liquid outlet of the cooling device is in communication with the outlet pipe.

The liquid inlet pipe is in communication with a liquid inlet of the circulating pump, a liquid outlet of the circulating pump is in communication with a liquid inlet of the cooling device, and the liquid outlet of the cooling device is in communication with a liquid outlet pipe.

The advantageous effects of the present disclosure are as follows.
1. The present disclosure solves the problem that the wire diameter of the high-voltage wire harness at present is large. The liquid cooling technology is used to reduce the heat generation amount of the electrical connection framework, so that the electrical connection framework can conduct a large current with a small wire diameter.
2. The problem that automatic production and assembly cannot be realized due to the use of flexible cables for the high-voltage wire harnesses is solved, and the use of at least partially hard electrical connection skeleton can achieve the automatic fabrication and assembly of wiring harness. The present disclosure solves the problem that the automatic production and assembling cannot be realized due to the use of flexible cables for the high-voltage wire harnesses at present. The automatic fitting and assembling of the wire harness can be realized using the electrical connection framework which is at least partially rigid.
3. The present disclosure solves the problem of the low cooling efficiency of the liquid-cooled wire harness at present. The liquid-cooled wire harness is cooled through a liquid-cooled pipe at present, while in the present disclosure, the cooling liquid directly contacts the electrical connection framework, so that the temperature of the electrical connection framework can be quickly decreased, and a high current conduction can be realized.
4. The present disclosure solves the problem that the flexible cable contacts and rubs the vehicle shell, which cause the damage and short circuit of the insulation layer. The electrical connection framework can be arranged according to the shape of the vehicle body, while keeping a distance from the vehicle body to avoid rubbing the vehicle shell, thereby ensuring the service life of the electrical connection framework.
5. The connector is provided with a shielding inner shell, which can effectively prevent the electromagnetic interference generated by the terminal of the connector. The shielding inner shell made of conductive plastic can be integrally formed with the connector by means of integral injection molding, which saves the machining time, improves the production efficiency and reduces the production cost.
6. The electrical connection framework includes a flexible portion and a bending portion, so that the structure of the connector assembly can be reasonably designed according to the mounting environment of the vehicle body, which makes the mounting of the connector assembly on the vehicle body easier and saves the assembly time.
7. The sealing ring can prevent the leakage of the cooling liquid at the connection point, and support the cavity to prevent the cavity from being squeezed and deformed under an external force and affecting the circulation of the cooling liquid.
8. The electrical connection framework is sleeved with the protective shell, which not only constructs the cavity, but also serves as a shielding layer to effectively shield the electromagnetic interference generated by the electrification of the electrical connection framework.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic diagram of a liquid cooling connector assembly of the disclosure.
FIG. 2 is a structural schematic diagram of a shielding inner shell of a liquid cooling connector assembly of the disclosure.
FIG. 3 is a cross-sectional view of an electrical connection skeleton of a liquid cooling connector assembly of the disclosure.
FIG. 4 is a structural schematic diagram of a rotary chamber of a liquid cooling connector assembly of the disclosure.
FIG. 5 is a structural schematic diagram of a liquid inlet cavity and a liquid rotary chamber of a liquid cooling connector assembly of the disclosure.
FIG. 6 is a structural schematic diagram of a support ring of a liquid cooling connector assembly of the disclosure.
FIG. 7 is a structural schematic diagram of a through hole of a liquid cooling connector assembly of the disclosure.
FIG. 8 is a structural schematic diagram of an adapter cavity of a liquid cooling connector assembly of the disclosure.
FIG. 9 is a structural schematic diagram of a liquid inlet cavity and a liquid outlet cavity of a liquid cooling connector assembly of the disclosure.

Description of reference numerals of main components:
1. connector; 11. first connector; 12. second connector; 2. electrical connection skeleton; 4. shielding inner shell; 5. protective shell; 6. cavity; 7. connection terminal; 8. sealing structure; 91. rotary chamber; 92. liquid inlet cavity; 921. liquid inlet pipe; 93. liquid outlet cavity; 931. liquid outlet pipe; 94. adapter cavity; 941. inlet pipe; 942. outlet pipe; 10. support ring; 101. through hole; 111. circulating pump; 112. cooling device.

### DETAILED DESCRIPTION

Various exemplary embodiments of the disclosure will now be described in detail with reference to the accompanying drawings. It should be noted that, unless otherwise specified, the relative arrangements, numerical expressions, and numerical values of parts and steps set forth in these embodiments do not limit the scope of the present disclosure.

The following description of at least one exemplary embodiment is in fact illustrative only and in no way constitutes any limitation to the present disclosure, and its application or use.

Technologies, methods and apparatuses known to those ordinarily skilled in the art may not be discussed in detail, but where appropriate, said technologies, methods and apparatuses shall be considered as part of the specification.

In all the examples shown and discussed here, any specific value should be interpreted as merely exemplary and does not serve as limitation. Therefore, other examples of the exemplary embodiments may have different values.

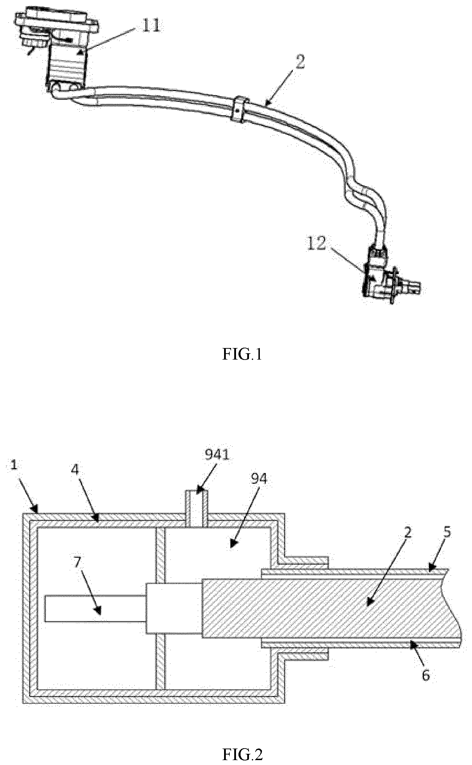

A connector assembly with liquid cooling function, which, as shown in FIGs. 1 to 7, includes at least one electrical connection skeleton 2 and connectors 1, in which the connector 1 includes a connection terminal 7, two ends of the electrical connection skeleton 2 are respectively electrically connected to connection terminals 7, a protective shell 5 with a shielding effectiveness is sleeved on the periphery of the electrical connection skeleton 2, a cavity 6 is formed between the outer periphery of the electrical connection skeleton 2 and an inner wall of the protective shell 5 with a shielding effectiveness, and the cavity has cooling liquid flowing through it 6.

At present, the high-voltage cables on most of the connector assembly use multi-core copper cables, which are heavy and expensive, and thus become an obstacle to popularization of new energy automobiles. In addition, although multi-core cable is soft and can be easily processed and wired, due to its coarse diameter and significant weight, the cable may have frequent friction with the automobile shell during driving of the automobile, resulting in damage to the insulation layer of the cable and causing high-voltage discharge, which mildly causes damage to the vehicle and seriously causes serious traffic accidents. Therefore, the multi-core cable structure can be replaced with the cable form of the electrical connection skeleton 2, so that the cable can be fixed on the automobile shell, and may not rub against the automobile shell along with vibration of the automobile, thereby extending the service life of the connector assembly and reducing the accident rate. When the automobile is charging, the current flowing through the electrical connection skeleton 2 is very high, the temperature of the electrical connection skeleton 2 rises rapidly, and cooling liquid flows through the cavity between the protective shell 5 with a shielding effectiveness and the electrical connection skeleton 2 to have a cooling effect on the electrical connection skeleton, thereby cooling the hot electrical connection skeleton 2, so that the connector assembly can work at a safe temperature.

In some embodiments, the material of the connection terminal 7 is copper or copper alloy. Copper or copper alloy has high electrical conductivity and is resistant to friction, and at present, the connection part of most electrical devices is made of copper, thus it is necessary to use the connection terminal 7 made of copper or copper alloy for plugging and unplugging connection. The connection terminal 7 can be widely used in various electrical transmission scenarios.

In some embodiments, the material of the cooling liquid is an insulating material, such as insulating oil. The insulating oil can quickly conduct the high temperature of the electrical connection skeleton 2 to the outside, to achieve the purpose of rapid cooling, and does not electrically connect the electrical connection skeleton 2 and the protective shell, which thus can realize the conductive function of different circuits.

In some embodiments, the material of the electrical connection skeleton 2 is a rigid solid conductor material. That is, the conductor is composed of a wire, and the specific material can be copper or copper alloy, aluminum or aluminum alloy with excellent electrical conductivity.

In some embodiments, the material of the electrical connection skeleton 2 is aluminum or aluminum alloy. The electrical connection skeleton 2 made of aluminum or aluminum alloy has the advantages of good rigidity, light weight and high transmission efficiency, especially suitable for the transmission of large current.

In some embodiments, the electrical connection skeleton 2 has a cross-sectional area of 1.5 mm² to 240 mm². The cross-sectional area of the electrical connection skeleton 2 determines the current that the electrical connection skeleton 2 can conduct. Under normal circumstances, the electrical connection skeleton 2 that achieves signal conduction has a small current and a small cross-sectional area. For example, the smallest cross-sectional area of the electrical connection skeleton 2 for transmitting signals may reach 1.5 mm², and the electrical connection skeleton 2 that achieves power conduction has a high current and a large cross-sectional area. For example, for automobile battery harness, the electrical connection skeleton 2 has a largest cross-sectional area of 240 mm².

In some embodiments, the electrical connection skeleton 2 is electrically connected to the connection terminal 7 by welding or crimping. The material of the connection terminal 7 is copper or copper alloy, and the material of the electrical connection skeleton 2 is aluminum or aluminum alloy. Copper or copper alloy has high electrical conductivity and is resistant to friction, and at present, the connection part of most electrical devices is made of copper, thus it is necessary to use the connection terminal 7 made of copper or copper alloy for plugging and unplugging connection. The connection terminal 7 can be widely used in various electrical transmission scenarios. The electrical connection skeleton 2 made of aluminum or aluminum alloy has the advantages of good rigidity, light weight and high transmission efficiency, especially suitable for the transmission of large current. The connection terminal 7 and the electrical connection skeleton 2 are connected by welding. The welding methods adopted include one or more selected from the group consisting of resistance welding, friction welding, ultrasonic welding, arc welding, laser welding, electron beam welding, pressure diffusion welding and magnetic induction welding. The concentrated heat energy or pressure is used to create a fused connection between the connection terminal 7 and the electrical connection skeleton 2, to achieve a stable welding connection.

In addition, the metal inertia of copper is greater than that of aluminum, the electrode potential difference between copper and aluminum is 1.9997 V, and an electrochemical reaction occurs after the two metals are connected and electrified, causing the aluminum wire to be oxidized gradually, and reducing the mechanical strength and conductivity of the aluminum wire. The use of welding can achieve connection of dissimilar materials, and has better conductive effect due to contact position fusion.

The resistance welding refers to a method that utilizes a strong current passing through the contact point between the electrode and the workpiece, and achieves welding by generating heat from the contact resistance.

The friction welding refers to a method that utilizes the heat generated by the friction of the workpiece contact surface as the heat source to make the workpiece undergo plastic deformation under the action of pressure, to achieve welding.

The ultrasonic welding refers to a method that utilizes high-frequency vibration waves transmitted to the surfaces of two objects to be welded, and under pressure, the surfaces of two objects rub against each other to form a fusion between molecular layers.

The arc welding refers to a method that electric arc is taken as the heat source and the physical phenomenon of air discharges is utilized to convert electrical energy into thermal and mechanical energy required for welding, so as to achieve the purpose of connecting metal, and the main methods include shielded metal arc welding, submerged arc welding, gas shielded welding and so on.

The laser welding method refers to an efficient and precise welding method that utilizes a laser beam with high energy density as a heat source.

The friction welding method refers to a method of welding by using the heat generated by the friction of the workpiece contact surface as the heat source to make the workpiece produce plastic deformation under the action of pressure.

The electron beam welding method refers to a method that utilizes accelerated and focused electron beam to bombard the welding surface placed in vacuum or non-vacuum, so that the welded workpiece is melted to achieve welding.

The pressure welding method is a method of applying pressure to a weldment to make the joint surfaces be in contact closely and undergo a certain plastic deformation, thereby completing the welding.

The magnetic induction welding method refers to a method that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld conductive metals with similar or dissimilar properties together.

The crimping refers to the production process that after the electrical connection skeleton and the connection terminal are assembled, the two are stamped into an integral whole by using a crimping machine. The advantage of crimping is its production capability, and a large amount of products with stable quality can be produced quickly by using an automatic crimping machine.

In some embodiments, the material of the protective shell 5 is a rigid conductive material. The shape and size of the rigid conductor material do not change during motion and under applied force, and the relative position of the internal points does not change, the physical performance is stable, and the power transmission efficiency is also stable.

In some embodiments, the material of the protective shell 5 is metal or conductive plastic. The electrically conductive plastic is conductive plastic or conductive rubber containing metal particles. The advantage of using the electrically conductive plastic is that it can facilitate injection molding, and use of metal material can obtain better strength and protect the cavity. The user may select an appropriate material for the protective shell 5 based on their needs.

In some embodiments, the connector further includes a shielding inner shell 4 inside, and material of the shielding inner shell 4 is a conductive material. The shielding inner shell 4 is electrically connected to the protective shell 5 with a shielding effectiveness to form a complete shielding device. The shielding device may play the role of a shielding layer, and may effectively shield the electromagnetic interference generated by electrification of the electrical connection skeleton 2 and the connection terminal 7, which saves the use of the shielding net and reduces the cost of the connector assembly.

Further, the material of the shielding inner shell 4 is metal or electrically conductive plastic. The electrically conductive plastic is a conductive plastic or a conductive rubber which contains metal particles. The advantage of using the electrically conductive plastics is that it can be facilitated injection molding, and the user can select the shielding inner shell 4 made of appropriate material based on their needs.

In some embodiments, the conductive plastic is a polymeric material containing conductive particles. The material of the conductive particles contains one or more selected from the group consisting of a metal, a conductive ceramic, a carbon-containing conductor, a solid electrolyte, and a mixed conductor. The material of the polymeric material contains one or more selected from the group consisting of tetraphenyl ethylene, polyvinyl chloride, polyethylene, polyamide, polytetrafluoroethylene, an tetrafluoroethylene-hexafluoroethylene copolymer, an ethylene-tetrafluoroethylene copolymer, polypropylene, polyvinylidene fluoride, polyurethane, poly(terephthalic acid)(i.e.,polyethylene terephthalate), polyurethane elastomers, styrene block copolymer, perfluoroalkoxy alkane, chlorinated polyethylene, polyphenylene sulfide, polystyrene, crosslinked polyolefin, EPR (ethylene propylene rubber), an ethylenevinyl acetate copolymer, chloroprene rubber, natural rubber, styrene butadiene rubber, nitrile butadiene rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin. Conductive plastics containing different conductive particles may be selected according to needs.

In some embodiments, the material of the metal contains one or more selected from the group consisting of nickel, cadmium, zirconium, chromium, cobalt, manganese, aluminum, tin, titanium, zinc, copper, silver, gold, phosphorus, tellurium, beryllium. In order to demonstrate the influence of different metal materials on the conductivity of the shielding inner shell 4, the inventor conducts tests by using metal particles of the same specification and size and different materials to make samples of the shielding inner shell 4, to test the electric conductivity of the shielding inner shell 4 respectively, and the experimental results are shown in Table 1 below. In this embodiment, the electric conductivity of the shielding inner shell 4 being greater than 99% is regarded as an ideal value.

**Table 1: Influence of metal particles of different materials on the conductivity of the shielding inner shell 4**

| Metal of different materials | | | | | | | | | | | | | | | |
|---|---|---|---|---|---|---|---|---|---|---|---|---|---|---|---|
| Gold | Silve r | Coppe r | Nic kel | Titaniu m | Tin | Alumin um | Cadmiu m | Zirconiu m | Chromi um | Cobalt | Manganese. | Zinc | Tell uriu m | Bery lliu m | Palladiu m |

| Conductivity of shielding inner shell (%) | | | | | | | | | | | | | | | |
|---|---|---|---|---|---|---|---|---|---|---|---|---|---|---|---|
| 99.8 | 99.9 | 99.8 | 99.5 | 99.5 | 99.5 | 99.6 | 99.3 | 99.2 | 99.2 | 99.4 | 99.5 | 99.3 | 99.4 | 99.4 | 99.2 |

As can be seen from Table 1, the electric conductivity of the conductive plastic made of the selected different metal particles is within the range of the ideal value. In addition, phosphorus is a non-metal material and may not be directly used as material of the conductive plating, but it can be added into other metals to form alloy to improve the conductive and mechanical properties of the metal itself. Therefore, the inventor sets that the material of the metal particles contains one or more selected from the group consisting of nickel, cadmium, zirconium, chromium, cobalt, manganese, aluminum, tin, titanium, zinc, copper, silver, gold, phosphorus, tellurium, beryllium.

In some embodiments, the carbon-containing conductor contains one or more selected from the group consisting of graphite powder, carbon nanotube material, graphite-silver composite, graphene-silver composite, and graphene material. Graphite powder is a kind of mineral powder, mainly composed of a carbon simple substance, soft, black and gray; Graphite powder is a good non-metallic conductive material. Carbon nanotubes have good electrical conductivity, and because the carbon nanotubes have the same structure as the lamellar structure of graphite, they have good electrical properties. Particularly, graphene has extremely high electrical properties, and the carbon-containing conductor containing the graphite powder, the carbon nanotubes or graphene has high conductivity and good shielding performance, which can achieve electromagnetic shielding to the electrical connection skeleton 2 very well.

In some embodiments, the protective shell 5 is electrically connected to the shielding inner shell 4 by crimping or welding. Aluminum or aluminum alloy material has good conductive property, light weight and low price. The shielding inner shell 4 made of aluminum or aluminum alloy can play a good shielding effectiveness to prevent the electromagnetic radiation of the connection terminal 7 and the electrical connection skeleton 2 from affecting other devices.

Crimping is a production process that after the shielding inner shell 4 and the protective shell 5 with a shielding effectiveness are assembled, the two are stamped into an integral whole using a crimping machine. The advantage of crimping is good manufacturability, and a large amount of products with stable quality can be produced quickly by using an automatic crimping machine.

The welding method is basically the same as the welding method of the connection terminal 7 and the electrical connection skeleton 2, and thus is not repeated.

In some embodiments, an impedance between the protective shell 5 and the shielding inner shell 4 is less than 80 mS2.

The impedance between the protective shell 5 and the shielding inner shell 4 shall be as small as possible, so that the current generated by the shielding inner shell 4 may flow back without obstruction to the energy source or the grounding position. If the impedance between the protective shells and the shielding inner shell 4 is large, high current may be generated between the protective shell 5 and the shielding inner shell 4, resulting in a large radiation at the cable connection.

In order to verify the influence of the impedance between the protective shell 5 and the shielding inner shell 4 on the shielding effectiveness, the inventor selects the electrical connection skeleton 2, the connector 1 and the connection terminal 7 of the same specification, and selects different impedances between the protective shell 5 and the shielding inner shell 4 to make a series of samples to respectively test the shielding effectiveness, and the experimental results are shown in Table 2 below. In this embodiment, the shielding performance value greater than 40 dB is regarded as the ideal value.

The test method of the shielding performance value is to use test instrument to output a signal value (this value is the test value 2) to the electrical connection skeleton 2, and to provide a detection device outside the electrical connection skeleton 2, and the detection device detects a signal value (this value is the test value 1). Shielding performance value = test value 2 - test value 1.

**Table 2: Influence of impedance between the protective shell 5 and the shielding inner shell 4 on the shielding performance**

| Measuring parameter | Impedance between the protective shell 5 and the shielding inner shell 4 (mS2) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 74 | 72 | 66 | 61 | 57 | 52 | 49 | 38 | 32 | 28 |

As can be seen from Table 2, when the impedance value between the protective shell 5 and the shielding inner shell 4 is greater than or equal to 80 mQ, the shielding performance value is less than 40 dB, which does not meet the ideal value requirement; while when the impedance value between the protective shell 5 and the shielding inner shell 4 is less than 80 mQ, the shielding performance value all meets the ideal value requirements, and the trend is getting better and better. Therefore, the inventor sets the impedance between the protective shell 5 and the shielding inner shell 4 to be less than 80 mS2.

In some embodiments, the transfer impedance of the protective shell 5 is less than 100 mQ. The shielding material usually uses the transfer impedance to characterize the shielding effectiveness of the protective shell 5, and the smaller the transfer impedance is, the better the shielding effectiveness is. The transfer impedance of the protective shell 5 is defined as the ratio of the differential mode voltage U induced by the shield per unit length to the current Is passing through the shield surface, i.e.,

Z_{T}=U/I_{S}, so that it can be understood that the transfer impedance of the protective shell 5 converts the current of the protective shell 5 into differential mode interference. The smaller the transfer impedance is, the better it is. That is, better shielding performance can be obtained by reducing the differential mode interference conversion.

In order to verify the influence of the protective shell 5 having different transfer impedance values on the shielding effectiveness, the inventor selects the electrical connection skeleton 2, the connector 1 and the connection terminal 7 of the same specification, and uses the protective shell 5 having different transfer impedance values to make a series of samples to respectively test the shielding effectiveness, and the experimental results are shown in Table 3 below. In this embodiment, the shielding performance value greater than 40 dB is the ideal value.

The test method of the shielding performance value is to use test instrument to output a signal value (this value is the test value 2) to the electrical connection skeleton 2, and to provide a detection device outside the electrical connection skeleton 2, and the detection device detects a signal value (this value is the test value 1). Shielding performance value = test value 2 - test value 1.

**Table 3: Influence of transfer impedance of the protective shell 5 on the shielding performance**

| Measuring parameter | Transfer impedance of the protective shell 5 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 71 | 67 | 63 | 58 | 53 | 46 | 36 | 30 | 26 |

As can be seen from Table 3 above, when the transfer impedance value of the protective shell 5 is greater than or equal to 100 mQ, the shielding performance value of the protective shell 5 is less than 40 dB, which does not meet the requirement of the ideal value; and when the transfer impedance value of the protective shell 5 is less than 100 mQ, the shielding performance values of each of protective shells 5 meets the requirement of the ideal value, and the trend is getting better and better, therefore, the inventor sets the transfer impedance of the protective shell 5 to be less than 100 mS2.

In some embodiments, the transfer impedance of the shielding inner shell 4 is less than 100 mQ. In order to verify the influence of the shielding inner shell 4 having different transfer impedance values on the shielding effectiveness, the inventor selects the electrical connection skeleton 2, the connector 1 and the connection terminal 7 of the same specification, and uses the shielding inner shell 4 having different transfer impedance values to make a series of samples to respectively test the shielding effectiveness, and the experimental results are shown in Table 4 below. In this embodiment, the shielding performance value greater than 40 dB is the ideal value.

The test method of the shielding performance value is to use test instrument to output a signal value (this value is the test value 2) to the electrical connection skeleton 2, and to provide a detection device outside the shielding inner shell 4, and the detection device detects a signal value (this value is the test value 1). Shielding performance value = test value 2 - test value 1.

**Table 4: Influence of transfer impedance of the shielding inner shell 4 on the shielding performance**

| Measuring parameter | Transfer impedance of shielding inner shell 4 (mS2) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 71 | 66 | 63 | 58 | 55 | 46 | 37 | 31 | 27 |

As can be seen from Table 4 above, when the transfer impedance value of the shielding inner shell 4 is greater than or equal to 100 mQ, the shielding performance value of the shielding inner shell 4 is less than 40 dB, which does not meet the requirement of the ideal value; and when the transfer impedance value of the shielding inner shell 4 is less than 100 mQ, the shielding performance values of each of shielding inner shells 4 meets the requirement of the ideal value, and the trend is getting better and better, therefore, the inventor sets the transfer impedance of the shielding inner shell 4 to be less than 100 mS2.

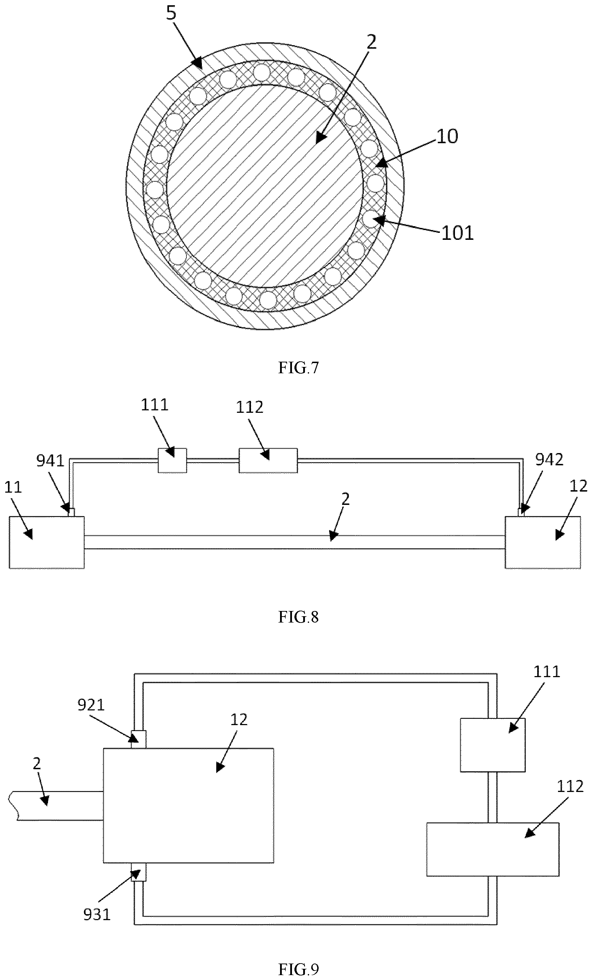

In some embodiments, the number of the electrical connection skeleton 2 is one, the connector 1 includes a first connector 11 and a second connector 12 that are connected to two ends of the electrical connection skeleton 2, respectively, the first connector 11 and the second connector 12 are internally provided with an adapter cavity 94, the adapter cavity 94 is in communication with the cavity 6, the first connector 11 is provided with an inlet pipe 941 that is in communication with the adapter cavity 94, and the second connector 12 is provided with an outlet pipe 942 that is in communication with the adapter cavity. As shown in FIG. 2 and FIG. 8, the cooling liquid, driven by a driving device, enters the adapter cavity 94 of the first connector 11 from the inlet pipe 941, then enters the adapter cavity 94 of the second connector 12 from the cavity 6 of one electrical connection skeleton 2, then is exported by the outlet pipe 942 of the second connector, and then enters the first connector 11 from the driving device, to form a complete cooling cycle.

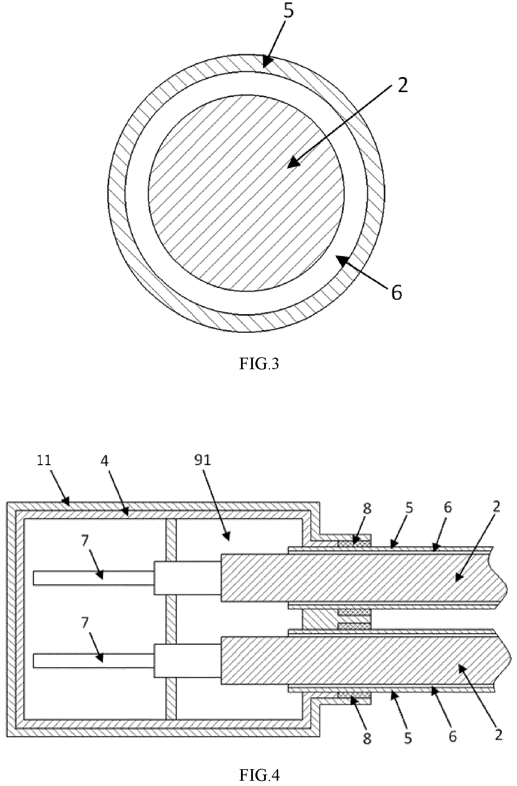

In some embodiment, the number of the electrical connection skeleton 2 is at least two, the connector 1 includes a first connector 11 and a second connector 12 that are connected to two ends of the electrical connection skeleton 2, respectively, the first connector 11 is internally provided with a communicating rotary chamber 91, the rotary chamber 91 is in communication with the cavity 6 of each of the electrical connection skeletons 2; the second connector 12 is internally provided with a liquid inlet cavity 92 and a liquid outlet cavity 93 that are isolated from each other, and the liquid inlet cavity 92 and the liquid outlet cavity 93 are respectively in communication with the cavities 6 of the individual electrical connection skeletons 2. As shown in FIG. 4, FIG. 5, and FIG. 9, unlike the previous embodiment, in this embodiment, the cooling loop consists of two electrical connection skeletons 2, where the cooling liquid, driven by the driving device, enters the liquid inlet cavity 92 of the second connector 12, then enters the rotary chamber 91 of the first connector 11 from the cavity 6 of one electrical connection skeleton 2, then enters the cavity 6 of the other electrical connection skeleton 2, and then enters the liquid outlet cavity 93, then is cooled and enters the liquid inlet cavity 92 from the driving device, to form a complete cooling cycle.

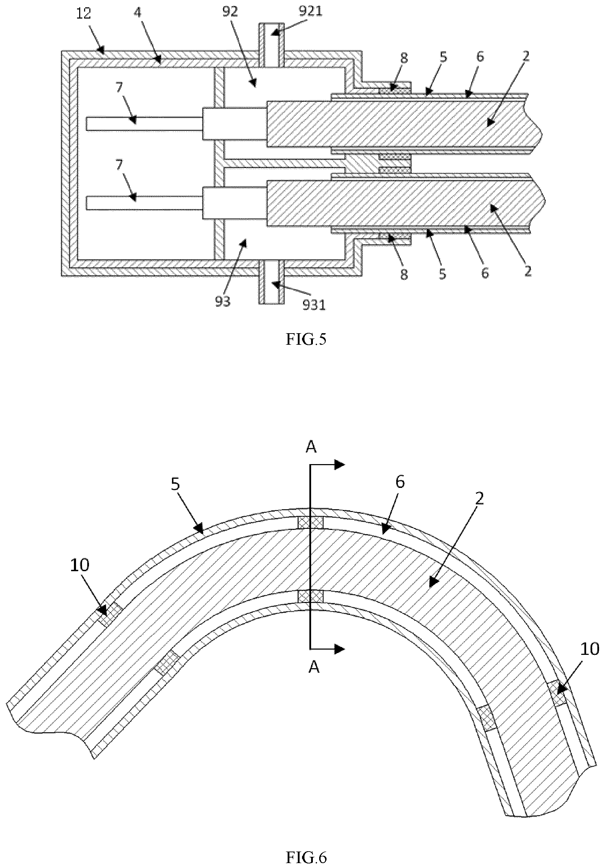

In some embodiments, a side wall of the liquid inlet cavity 92 is provided with a liquid inlet pipe 921 that is in communication with outside of the connector 1, and a side wall of the liquid outlet cavity 93 is provided with a liquid outlet pipe 931 that is in communication with the outside of the connector 1. As shown in FIG. 5, the cooling liquid enters the liquid inlet cavity 92 from the liquid inlet pipe 921, and then flows out of the liquid outlet cavity 93 from the liquid outlet pipe 931.

In some embodiments, a sealing structure 8 is arranged between the connector 1 and the protective shell 5. As shown in FIG. 4, the sealing structure 8 seals the connection point. The sealing structure 8 can prevent the cooling liquid from leaking from the connection point of the connector 1 and the protective shell 5. The sealing structure 8 may be a sealing ring.

In some embodiments, at least one support ring 10 is arranged inside the cavity 6. As shown in FIG. 6, an inner wall of the support ring 10 is in contact with the outer periphery of the electrical connection skeleton 2, and an outer wall of the support ring 10 is in contact with the inner wall of the protective shell 5. The support ring 10 is capable of supporting the cavity 6 to prevent the cavity 6 from being narrowed due to external extrusion, which results in a decrease in the cooling efficiency of the connector assembly, at the same time, the support ring 10 is capable of avoiding short circuit caused by contact between the electrical connection skeleton 2 and the protective shell 5. The number of the support ring 10 may be set to be plural. During processing, the support ring 10 may firstly be fixed on the electrical connection skeleton 2 and then be sleeved with the protective shell 5, and next the protective shell 5 is squeezed such that the outer wall of the support ring 10 is in contact with the inner wall of the protective shell 5.

Further, the support ring 10 is provided with at least one through hole 101 in an axial direction of the electrical connection skeleton 2. As shown in FIG. 7, in order to prevent the support ring 10 from blocking the flow of the cooling liquid that may result in a decrease in the cooling efficiency of the connector assembly, the support ring 10 is provided with at least one through hole 101 in an axial direction of the electrical connection skeleton 2, which is capable of causing the cooling liquid to pass through the support ring 10 smoothly and obtain the cooling effect.

Further, a sum of cross-sectional areas of the through holes 101 accounts for 23% to 90% of the cross-sectional area of the cavity 6. If the sum of cross-sectional areas of the through holes 101 is too large, the supporting force of the supporting ring 10 will be insufficient; if the sum of cross-sectional areas of the through holes 101 is too small, the cooling efficiency will be insufficient. In order to select a reasonable sum of cross-sectional areas of the through holes 101, the inventor conducts relevant tests by selecting the same electrical connection skeleton 2 with the same cavity 6, the support rings 10 with different through holes 101 are arranged in cavity 6, and a force of 80 N is applied to observe whether the cavity 6 deforms. If the cavity 6 deforms, the result of the test is regarded as being not qualified. In a closed environment, the same current is conducted for the electrical connection skeletons 2 with different through holes 101, and the temperature rise less than 50 K is regarded as a qualified value. The results are shown in Table 5.

**Table 5: Influence of ratio of the sum of cross-sectional areas of the through holes 101 to cross-sectional area of the cavity 6 on the support for cooling the cavity 6 and the temperature rise of the electrical connection skeleton 2**

| Ratio of the sum of cross-sectional areas of the through holes 101 to cross-sectional area of the cavity 6 (%) | | | | | | | | | | | | |
|---|---|---|---|---|---|---|---|---|---|---|---|---|
| 22 | 23 | 25 | 30 | 35 | 40 | 50 | 60 | 70 | 80 | 88 | 90 | 92 |

| Whether the cavity 6 deforms | | | | | | | | | | | | |
|---|---|---|---|---|---|---|---|---|---|---|---|---|
| NO | NO | NO | NO | NO | NO | NO | NO | NO | NO | NO | NO | YES |

| Temperature rise of the electrical connection skeleton (K) | | | | | | | | | | | | |
|---|---|---|---|---|---|---|---|---|---|---|---|---|
| 50.2 | 49 | 47.5 | 44 | 41.2 | 39.8 | 38.5 | 37.1 | 33.2 | 30.9 | 27.5 | 26.8 | 26.5 |

As can be seen from Table 5 above, when the ratio of the sum of cross-sectional areas of the through holes 101 to cross-sectional area of the cavity 6 is less than 23%, the temperature rise of the electrical connection skeleton 2 is greater than 50.2K, which is regarded as being unqualified; when the ratio of the sum of cross-sectional areas of the through holes 101 to cross-sectional area of the cavity 6 is greater than 90%, the cavity 6 may be deformed under the acting force of 80 N, which may easily cause the cooling rate to decrease, and even the cooling liquid to leak. Therefore, the inventor exemplarily selects that the ratio of the sum of cross-sectional areas of the through holes 101 to cross-sectional area of the cavity 6 is 23% to 90%.

In some embodiments, the electrical connection skeleton 2 has at least one bending position, the bending position has an arc, and support rings 10 are arranged at least at both ends of the arc and at an intermediate position of the arc, respectively. As shown in FIG. 6, the arc formed at the bending position of the electrical connection skeleton 2 is more likely to be squeezed, thus the support rings10 are arranged at both ends of the arc and at an intermediate position of the arc to play a better supporting role.

In some embodiments, the electrical connection skeleton 2 has a cross section in a shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, P-shaped, U-shaped, V-shaped, W-shaped, X-shaped, Y-shaped, Z-shaped, semi-arc, arc, and waved shape. In actual use, electrical connection skeletons 2 with different cross sections can be used according to the need.

In some embodiments, the cross-section shape of the electrical connection skeleton 2 is a polygon, and corners of the polygon are all rounded or chamfered, which can prevent its sharp parts from causing damage to the insulation layer or the shielding layer.

In some embodiments, at least part of the electrical connection skeleton 2 is a flexible body. The flexible body is capable of ensuring that the electrical connection skeleton 2 is capable of being bent by a large angle, to be conveniently disposed in the vehicle body with a large corner.

In some embodiments, the electrical connection skeleton 2 includes at least one bending portion, to meet the needs of installation in the vehicle body.

In some embodiments, thickness of the protective shell 5 accounts for 1% to 15% of an outer diameter of the protective shell 5. If the thickness of the protective shell 5 is too small, the conductivity is insufficient, and the shielding effectiveness cannot meet the requirements. If the thickness of the protective shell 5 is too large, there may be waste of material and increase of weight of the vehicle body. In order to demonstrate the influence of ratio of different thicknesses of the protective shell 5 to outer diameter of the protective shell 5 on the conductivity of the protective shell 5, the inventor uses materials of different thicknesses and the same material to make samples of the protective shell 5 to test the conductivity respectively, and the experimental results are shown in Table 6. In this embodiment, the conductivity of the protective shell 5 being greater than or equal to 99% is regarded as the ideal value.

**Table 6: Influence of ratio of different thicknesses of the protective shell 5 to outer diameter of the protective shell 5 on the conductivity**

| Percentage of different thicknesses of the protective shell 5 to the outer diameter of the protective shell 5 (%) | | | | | | | | | | | | | | |
|---|---|---|---|---|---|---|---|---|---|---|---|---|---|---|
| 0.8 | 1 | 2 | 3 | 4 | 5 | 7 | 9 | 10 | 11 | 12 | 13 | 14 | 15 | 16 |

| Electric conductivity (%) | | | | | | | | | | | | | | |
|---|---|---|---|---|---|---|---|---|---|---|---|---|---|---|
| 98.9 | 99 | 99 | 99.1 | 99.1 | 99.2 | 99.3 | 99.4 | 99.5 | 99.6 | 99.7 | 99.8 | 99.8 | 99.9 | 99.9 |

As can be seen from Table 6, when the percentage of thickness of the protective shell 5 to the outer diameter of the protective shell 5 with a shielding effectiveness is less than 1%, the conductivity of the protective shell 5 is less than 99%, which is regarded as being not qualified; when the ratio of the thickness of the protective shell 5 to the outer diameter of the protective shell 5 is greater than 15%, the conductivity has not increased significantly, and the shielding effectiveness may not be further enhanced, and a thicker protective shell 5 may increase the cost and weight of the vehicle body, thus the inventor exemplarily selects that the thickness of the protective shell 5 accounts for 1% to 15% of the outer diameter of the protective shell 5 with a shielding effectiveness.

In some embodiments, the outer diameter of the cavity 6 is 1.02 to 1.3 times of the outer diameter of the electrical connection skeleton 2. If the outer diameter of the cavity 6 is too small and the cooling liquid flowing through is not enough, the cooling efficiency is insufficient. In order to find a suitable relationship between the outer diameter of the cavity 6 and the outer diameter of the electrical connection skeleton 2, the inventor conducts relevant tests by selecting the same electrical connection skeleton 2 and cavities 6 with different outer diameters, into which the same cooling liquid flows at the same speed. The temperature rise is measured after the electrical connection skeleton 2 is electrified, and the temperature rise being less than 50 K is regarded as a qualified value. The results are shown in Table 7.

**Table 7: Influence of ratio of the outer diameter of the cavity 6 to the outer diameter of the electrical connection skeleton 2 on the temperature rise of the electrical connection skeleton**

| Ratio of the outer diameter of the cavity 6 to the outer diameter of the electrical connection skeleton 2 (%) | | | | | | | | | | | | |
|---|---|---|---|---|---|---|---|---|---|---|---|---|
| 1 | 1.02 | 1.06 | 1.10 | 1.11 | 1.13 | 1.15 | 1.17 | 1.20 | 1.25 | 1.28 | 1.3 | 1.31 |

| Temperature rise of the electrical connection skeleton (K) | | | | | | | | | | | | |
|---|---|---|---|---|---|---|---|---|---|---|---|---|
| 50.2 | 49.6 | 47.5 | 44 | 41.2 | 39.8 | 38.5 | 37.1 | 33.2 | 30.9 | 27.5 | 26.8 | 26.8 |

As can be seen from Table 7 above, when the ratio of the outer diameter of the cavity 6 to the outer diameter of the electrical connection skeleton 2 is less than 1.02, the temperature rise of the electrical connection skeleton 2 is greater than 50 K, which is regarded as being not qualified; and when the ratio of the outer diameter of the cavity 6 to the outer diameter of the electrical connection skeleton 2 is greater than 1.3, the temperature rise of the electrical connection skeleton 2 has no significant change, and a thicker cavity 6 may increase the cost and weight of the vehicle body, thus the inventor exemplarily selects that the outer diameter of the cavity 6 is 1.02 to 1.3 times the outer diameter of the electrical connection skeleton 2.

In some embodiments, a boiling point of the cooling liquid is higher than or equal to 100 °C. Different cooling liquids have different boiling points under the same external pressure, and the characteristics and composition of the cooling liquid itself lead to different boiling points. Now the boiling point of the cooling liquid is higher than 100 °C, it is less likely to experience " coolant boiling " phenomenon. Because once the cooling liquid reaches the boiling point, a lot of steam and bubbles may be generated. Part of area of the cooling system is occupied by the bubbles, which may hinder flowing of the cooling liquid and then reduce the cooling efficiency. Therefore, the inventor exemplarily selects that the boiling point of the cooling liquid is higher than or equal to 100 °C.

In some embodiments, the cooling liquid contains one or more selected from the group consisting of purified water, silicone oil, fluorinated liquid, ethylene glycol, castor oil, coconut oil, corn oil, cottonseed oil, linseed oil, olive oil, palm oil, peanut oil, grapeseed oil, rapeseed oil, safflower oil, sunflower oil, soybean oil, high oleic acid variants of various vegetable oils, decene-4-carboxylic-acid, decenoic acid, lauroleic acid, combined spicebush root acid, tetradecenoic acid, physeteranic acid, crude fatty acid, palmitoleic acid, petroselinic acid, oleic acid, octadecenoic acid, gadusenoic acid, gondoic acid, cetoleic acid, erucic acid, and nervonic acid, glycerolgly, transformer oil, axle oil, internal combustion engine oil, or compressor oil. Additives can also be added into the cooling liquid, and the additives are selected from one or more selected from the group consisting of antioxidant, pour point depressant, corrosion inhibitor, antimicrobial agent, and viscosity modifier. These cooling liquids have advantages of sensitive heat balance ability, superior heat conduction ability, ultra-wide operating temperature range, and prevent coolant boiling and boil-over.

In some embodiments, a cooling rate of the cooling liquid on the electrical connection 2 is 0.05 to 5 K/s. In order to verify the influence of the cooling rate of the cooling liquid on the temperature rise of the electrical connection skeleton 2, the inventor selects 10 electrical connection skeletons 2 that have the same cross-sectional area, are made of the same material and have the same length, and are electrified by the same current, uses cooling liquids with different cooling rates to cool the electrical connection skeleton 2, and reads temperature rise values of individual electrical connection skeletons 2, which are recorded in Table 8.

The experimental method is that, in a closed environment, the electrical connection skeletons 2 with the cooling liquids at different cooling rates are electrified with the same current, to record the temperature before electrification and the temperature when it is stabilized after electrification, and to calculate a difference and obtain an absolute value. In this embodiment, a temperature rise of less than 50K is a qualified value.

**Table 8: Influence of cooling liquids at different cooling rates on temperature rise of the electrical connection skeleton 2**

| Cooling liquid cooling rate (K/min) | | | | | | | | | | | | |
|---|---|---|---|---|---|---|---|---|---|---|---|---|
| 0.01 | 0.03 | 0.05 | 0.1 | 0.3 | 0.5 | 1 | 2 | 3 | 4 | 5 | 6 | 7 |

| Temperature rise of the electrical connection skeleton 2 (K) | | | | | | | | | | | | |
|---|---|---|---|---|---|---|---|---|---|---|---|---|
| 63.0 | 58.5 | 49.6 | 48.7 | 47.1 | 45.5 | 41.4 | 37.7 | 33.3 | 30.9 | 27.5 | 27.5 | 27.4 |

As can be seen from Table 8 above, when the cooling rate of the cooling liquid is less than 0.05 K/s, the temperature rise value of the electrical connection skeleton 2 is unqualified. The greater the cooling rate of the cooling liquid is, the smaller the temperature rise value of the electrical connection skeleton 2 is. However, when the cooling rate of the cooling liquid is greater than 5 K/s, the temperature rise of the electrical connection skeleton 2 is not significantly reduced, and a higher cooling rate means a higher price and a more complex process, thus the inventor sets the cooling rate of the cooling liquid to 0.05 to 5 K/s.

In some embodiments, one of the connectors is a charging socket. One end of the electrical connection skeleton 2 is connected to the connection terminal 7 in the charging socket, and the other end thereof is connected to the vehicle-mounted battery through the connection terminal 7 to form the charging line of the automobile.

The disclosure further provides a vehicle including a connector assembly with liquid cooling function, a circulating pump 111 and a cooling device 112 as described above, wherein the cavity 6 is in communication with the circulating pump 111 and the cooling device 112. The circulating pump 111 feeds the cooling liquid into the cavity 6 to cool the electrical connection skeleton 2, and the cooling liquid flows out of the cavity 6. At this time, the temperature of the cooling liquid has been relatively high, and after entering the cooling device 112, the temperature of the cooling liquid drops and again the cooling liquid is sent into the cavity by the circulating pump 111, thereby forming a complete cooling cycle.

In some embodiments, the inlet pipe 941 is in communication with a liquid inlet of the circulating pump 111, a liquid outlet of the circulating pump 111 is in communication with a liquid inlet of the cooling device 112, and a liquid outlet of the cooling device 112 is in communication with the outlet pipe 942. The circulating pump 111 drives the cooling liquid to enter the cooling device 112, and then flow through the liquid outlet of the cooling device 112 to enter the outlet pipe 942, and then flow through the cavity 6 to cool the electrical connection skeleton 2 and then enter the circulating pump 111 through the inlet pipe 941, to form a complete cooling cycle.

In some embodiments, the liquid inlet pipe 921 is in communication with the liquid inlet of the circulating pump 111, the liquid outlet of the circulating pump 111 is in communication with the liquid inlet of the cooling device 112, and the liquid outlet of the cooling device 112 is in communication with the liquid outlet pipe 931. The circulating pump 111 drives the cooling liquid to enter the cooling device 112, then flow through the liquid outlet pipe 931 to enter the liquid outlet cavity 93, then enter the cavity 6 of one electrical connection skeleton 2, enter the rotary chamber 91, then enter the cavity 6 of the other electrical connection skeleton 2, and finally flow through the liquid inlet pipe 921 of the second connector 12 to enter the circulating pump 111, thereby forming a complete cooling cycle. Of course, this cycle can also be reversed, that is, the circulating pump 111 drives the cooling liquid to firstly enter the liquid inlet pipe 921, and finally enter the cooling device 112, thereby completing the cooling cycle as well.

Although some specific embodiments of the disclosure have been described in detail by examples, it should be understood by those skilled in the art that the above examples are intended only for illustration and not to limit the scope of the disclosure. Those skilled in the art should understand that the above embodiments may be modified without departing from the spirit or scope of the disclosure. The scope of the disclosure is limited by the appended claims.

## Claims

1. A liquid cooling connector assembly, comprising at least one electrical connection skeleton and connectors, wherein each of the connectors comprises a connection terminal, two ends of the electrical connection skeleton are respectively electrically connected to connection terminals, a protective shell with shielding effectiveness is sleeved on an outer periphery of the electrical connection skeleton, a cavity is formed between the outer periphery of the electrical connection skeleton and an inner wall of the protective shell with shielding effectiveness, and the cavity has cooling liquid flowing through it.

2. The liquid cooling connector assembly according to claim 1, wherein material of the cooling liquid is an insulating material.

3. The liquid cooling connector assembly according to claim 1, wherein material of the electrical connection skeleton is a rigid solid conductor material.

4. The liquid cooling connector assembly according to claim 1, wherein a cross sectional area of the electrical connection skeleton is 1.5 mm² to 240 mm².

5. The liquid cooling connector assembly according to claim 1, wherein the electrical connection skeleton is electrically connected to the connection terminal by welding or crimping.

6. The liquid cooling connector assembly according to claim 1, wherein material of the protective shell is a rigid conductive material.

7. The liquid cooling connector assembly according to claim 6, wherein the material of the protective shell is metal or conductive plastic.

8. The liquid cooling connector assembly according to claim 1, wherein the connector further comprises a shielding inner shell inside, and material of the shielding inner shell is a conductive material.

9. The liquid cooling connector assembly according to claim 8, wherein the material of the shielding inner shell is metal or conductive plastic.

10. The liquid cooling connector assembly according to any one of claims 7 and 9, wherein the conductive plastic is a polymeric material comprising conductive particles, the material of the conductive particles comprises one or more selected from the group consisting of a metal, a conductive ceramic, a carbon-containing conductor , a solid electrolyte, and a mixed conductor; the material of the polymeric material comprises one or more selected from the group consisting of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, poly(terephthalic acid), polyurethane elastomer, styrene block copolymer, perfluoroalkoxy alkane, chlorinated polyethylene, polyphenylene sulfide, polystyrene, crosslinked polyolefin, ethylene propylene rubber, Ethylene/vinyl acetate copolymer, chloroprene rubber, natural rubber, styrene butadiene rubber, nitrile butadiene rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

11. The liquid cooling connector assembly according to claim 10, wherein the material of the metal comprises one or more selected from the group consisting of nickel, cadmium, zirconium, chromium, cobalt, manganese, aluminum, tin, titanium, zinc, copper, silver, gold, phosphorus, tellurium, beryllium.

12. The liquid cooling connector assembly according to claim 10, wherein the carbon-containing conductor comprises one or more selected from the group consisting of graphite powder, carbon nanotube material, graphite-silver composite, graphene-silver composite, and graphene material.

13. The liquid cooling connector assembly according to claim 8, wherein the protective shell is electrically connected to the shielding inner shell by crimping or welding.

14. The liquid cooling connector assembly according to claim 13, wherein an impedance between the protective shell and the shielding inner shell is less than 80 mΩ.

15. The liquid cooling connector assembly according to claim 1, wherein a transfer impedance of the protective shell is less than 100 mS2.

16. The liquid cooling connector assembly according to claim 9, wherein a transfer impedance of the shielding inner shell is less than 100 mS2.

17. The liquid cooling connector assembly according to claim 1, wherein the number of the electrical connection skeleton is one, the connector comprises a first connector and a second connector that are connected to two ends of the electrical connection skeleton, respectively, the first connector and the second connector are internally provided with an adapter cavity, the adapter cavity is in communication with the cavity, the first connector is provided with an inlet pipe that is in communication with the adapter cavity, and the second connector is provided with an outlet pipe that is in communication with the adapter cavity.

18. The liquid cooling connector assembly according to claim 1, wherein the number of the electrical connection skeleton is at least two, the connector comprises a first connector and a second connector that are connected to two ends of the electrical connection skeleton, respectively, the first connector is internally provided with a communicating rotary chamber, the rotary chamber is in communication with the cavities of the individual electrical connection skeletons; the second connector is internally provided with a liquid inlet cavity and a liquid outlet cavity that are isolated from each other, and the liquid inlet cavity and the liquid outlet cavity are respectively in communication with the cavities of the electrical connection skeletons.

19. The liquid cooling connector assembly according to claim 18, wherein a side wall of the liquid inlet cavity is provided with a liquid inlet pipe that is in communication with outside of the connector, and a side wall of the liquid outlet cavity is provided with a liquid outlet pipe that is in communication with the outside of the connector.

20. The liquid cooling connector assembly according to claim 1, wherein a sealing structure is disposed between the connector and the protective shell.

21. The liquid cooling connector assembly according to claim 1, wherein at least one support ring is provided inside the cavity, an inner wall of the support ring is in contact with the periphery of the electrical connection skeleton, and an outer wall of the support ring is in contact with the inner wall of the protective shell.

22. The liquid cooling connector assembly according to claim 21, wherein the support ring is provided with at least one through hole in an axial direction of the electrical connection skeleton.

23. The liquid cooling connector assembly according to claim 22, wherein a sum of cross-sectional areas of the through holes accounts for 23% to 90% of the cross-sectional area of the cavity.

24. The liquid cooling connector assembly according to claim 23, wherein the electrical connection skeleton has at least one bending position, and support rings are arranged at least at both ends of the bending position and at an intermediate position of the bending position, respectively.

25. The liquid cooling connector assembly according to claim 1, wherein the electrical connection skeleton has a cross section in a shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, P-shaped, U-shaped, V-shaped, W-shaped, X-shaped, Y-shaped, Z-shaped, semi-arc, arc, and waved shape.

26. The liquid cooling connector assembly according to claim 1, wherein the cross section of the electrical connection skeleton is of a polygon, and each corner of the polygon is rounded or chamfered.

27. The liquid cooling connector assembly according to claim 1, wherein at least part of the electrical connection skeleton is a flexible body.

28. The liquid cooling connector assembly according to claim 1, wherein a thickness of the protective shell accounts for 1% to 15% of an outer diameter of the protective shell.

29. The liquid cooling connector assembly according to claim 1, wherein an outer diameter of the cavity is 1.02 to 1.3 times of an outer diameter of the electrical connection skeleton.

30. The liquid cooling connector assembly according to claim 1, wherein a boiling point of the cooling liquid is higher than or equal to 100 °C.

31. The liquid cooling connector assembly according to claim 1, wherein the cooling liquid comprises one or more selected from the group consisting of water, ethylene glycol, silicone oil, fluorinated liquid, castor oil, coconut oil, corn oil, cottonseed oil, linseed oil, olive oil, palm oil, peanut oil, grapeseed oil, rapeseed oil, safflower oil, sunflower oil, soybean oil, high oleic acid variants of various vegetable oils, decene-4- carboxylic-acid, decenoic acid, lauroleic acid, combined spicebush root acid, tetradecenoic acid, physeteranic acid, crude fatty acid, palmitoleic acid, petroselinic acid, oleic acid, octadecenoic acid, gadusenoic acid, gondoic acid, cetoleic acid, erucic acid, nervonic acid, glycerol, transformer oil, axle oil, internal combustion engine oil, or compressor oil.

32. The liquid cooling connector assembly according to claim 1, wherein a cooling rate of the cooling liquid on the electrical connection is 0.05 to 5 K/s.

33. The liquid cooling connector assembly according to claim 1, wherein one of the connectors is a charging socket.

34. A vehicle, comprising a liquid cooling connector assembly according to any one of claims 1 to 33, a circulating pump and a cooling device, wherein the cavity of the liquid cooling connector assembly is in communication with the circulating pump and the cooling device.

35. The vehicle according to claim 34, wherein an inlet pipe of the liquid cooling connector assembly is in communication with a liquid inlet of the circulating pump, a liquid outlet of the circulating pump is in communication with a liquid inlet of the cooling device, and a liquid outlet of the cooling device is in communication with an outlet pipe of the liquid cooling connector assembly.

36. The vehicle according to claim 34, wherein a liquid inlet pipe of the liquid cooling connector assembly is in communication with a liquid inlet of the circulating pump, a liquid outlet of the circulating pump is in communication with a liquid inlet of the cooling device, and a liquid outlet of the cooling device is in communication with a liquid outlet pipe of the liquid cooling connector assembly.
